# EUROPEAN PATENT SPECIFICATION

(11) **EP 0 921 668 B1**
(45) Date of publication and mention of the grant of the patent: **03.12.2003**
(21) Application number: 98306509.5
(22) Date of filing: 14.08.1998
(51) Int. Cl.: H04M 1/72, H04Q 7/32

(54) **TDMA communication method and system**
TDMA Kommunikationssystem und Verfahren
Système et méthode de communication AMRT

(30) Priority: 14.08.1997 KR 9738835
(43) Date of publication of application: 09.06.1999
(73) Proprietor: Samsung Electronics Co., Ltd., Suwon-city, Kyungki-do (KR)
(72) Inventor: Kim, Ju-Nyun, Kum-shi, Kyongsandbuk-do (KR)
(74) Representative: Lunt, Mark George Francis

(56) References cited:
- EP-A- 0 663 737
- EP-A- 0 713 345
- EP-A- 0 726 690
- WO-A-94/05101
- GB-A- 2 295 944
- US-A- 5 636 243

## Description

The present invention relates to a TDMA communication method and system, and in particular to an intercommunication method and system of a TDMA (Time Division Multiple Access) cordless telephone system, and more particularly, to an intercommunication method between portable units.

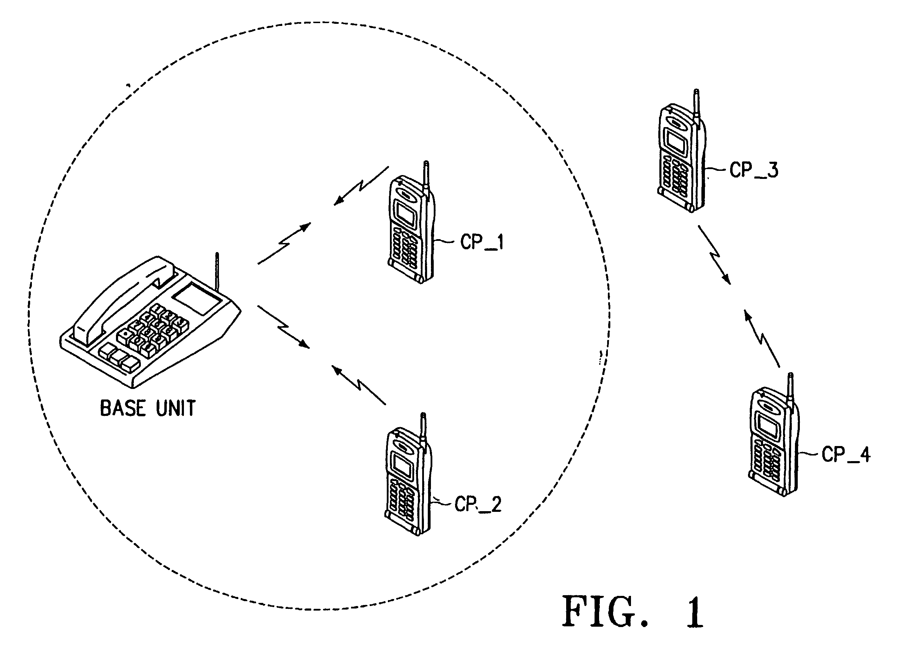

In general, a cordless telephone system is provided with a cordless base unit (referred to as base unit, for short) and a plurality of cordless portable units (referred to as portable units, for short). Recently, many users have registered two or more portable units with a base unit of the cordless telephone system. This cordless telephone system offers the function of intercommunication between portable units, that is, a voice communication between a calling portable unit and a called portable unit remotely located. This intercommunication is available via the base unit and will be described below referring to figure 1.

Figure 1 illustrates a base unit and a plurality of portable units (four portable units here) registered with the base unit in a cordless telephone system. In figure 1, two portable units CP_1 and CP_2 are positioned within a propagation area (or coverage) of a radio signal transmitted from the base unit and two portable units CP_3 and CP_4 are located beyond the propagation area. The base unit is connected to or disconnected from a main line (i.e., tip and ring terminals) depending on an off- or on-hook state. Upon connection to the main line, the base unit performs a communication through a telephone wire. Upon reception of a call request from a portable unit, the base unit connects the portable unit to the main line for a voice communication and wirelessly transfers a signal received through the wire to the portable unit. Therefore, a portable unit intercommunicates with another portable unit or communicates with an external user on the public telephone network by way of radio communication with the base unit.

There will be given an example of the intercommunication in a TDMA cordless telephone system. When the first portable unit CP_1 in the propagation area is to call the second portable unit CP_2 in the propagation area, the first portable unit CP_1 designates time slots to communicate with the base unit and sends a signal for requesting a call to the second portable unit CP_2 to the base unit in the time slots. Then, the base unit designates time slots unoccupied by the first portable unit CP_1 and calls the second portable unit CP_2 in the time slots. The second portable unit CP_2 receives a ring signal and communicates with the base unit when a user has the second portable unit CP_2 off hook. The base unit transmits data received from the second portable unit CP_2 to the first portable unit CP_1 in the time slots designated for the first portable unit CP_1. Thus, an intercommunication can be conducted between the portable units.

However, the conventional intercommunication method has a shortcoming in that portable units beyond the propagation area cannot intercommunicate with each other in a TDMA cordless telephone system because there is no base unit for transferring a call between them.

The document GB-A-2295944 discloses a TDMA communication system comprising a base station and a plurality of associated mobile stations with a connection methods that allows the direct communication between two mobile stations when they are outside the coverage area of the base station.

An object of the present invention is to provide an apparatus and method for conducting an intercommunication between portable units located beyond a radio signal propagation area of a base station in a cordless telephone system.

Accordingly, a first aspect of the present invention provides a communication method for TDMA communication between a first portable unit and second portable units which, when within the coverage area of a base station, communicate via the base station using transmission and reception time slots arranged according to a first order, the method comprising the steps of: determining whether or not the first portable unit is located within the coverage area of the base station; arranging the transmission and reception time slots of the first portable unit such that they coincide with the reception and transmission time slots of the second portable unit, if the portable units are not within the coverage area; and using the coincident time slots for support a speech mode of communication between the first and second portable units.

Preferably, an embodiment provides a method wherein the step of arranging comprises the steps of reversing the order of the transmission and reception time slots of the first portable unit by designating the transmission time slots of the first portable unit as reception time slots and designating the reception time slots of the first portable unit as transmission time slots.

Conventionally the base station collates registration data relating to each of the portable units which is serviced by that base station. Therefore, an embodiment provides a method further comprising the steps of reading data from a portable unit registration table stored in a memory of the first portable unit, the table comprising data relating to a plurality of portable units which are registered with the base station; displaying data relating selectable ones of the plurality of portable units, preferably excluding the first portable unit; selecting one of the displayed portable units; and transmitting a call signal to the selected portable unit.

Once the call or intercommunication has terminated, the portable units should preferably revert to the conventional mode of operating. Hence, an embodiment provides a method further comprising the step of receiving or generating a call termination signal; and restoring the transmission and reception time slots of the first portable unit by arranging the transmission and reception time slots according to the first order.

Conventional portable units cannot operate according to the above method. Accordingly, a aspect of the present invention provides a first portable unit for TDMA communication with a second portable units which, when within the coverage area of a base station, communication via the base station using transmission and reception time slots arranged according to a first order, the first portable unit comprising: means for determining whether or not the first portable unit is located within the coverage area of the base station; means for arranging the transmission and reception time slots of the first portable unit such that they coincide with the reception and transmission time slots of the second portable unit, if the portable units are not within the coverage area; and means for using the coincident time slots for support a speech mode of communication between the first and second portable units.

Preferably, an embodiment of the first portable unit is provided wherein the means for arranging comprises means for reversing the order of the transmission and reception time slots of the first portable unit by designating the transmission time slots of the first portable unit as reception time slots and designating the reception time slots of the first portable unit as transmission time slots.

Again, the first portable unit should know which other portable units can be contacted. Accordingly, an embodiment preferably provides a first portable unit further comprising means for reading data from a portable unit registration table stored in a memory of the first portable unit, the table comprising data relating to a plurality of portable units which are registered with the base station; means for displaying data relating selectable ones of the plurality of portable units, preferably excluding the first portable unit; means for selecting one of the displayed portable units; and means for transmitting a call signal to the selected portable unit.

It will be necessary to restore the operation of the first portable unit after the termination of a call or intercommunication with another portable unit. Therefore, a further embodiment provides a first portable unit further comprising means for receiving or generating a call termination signal; and means for restoring the transmission and reception time slots of the first portable unit by arranging the transmission and reception time slots according to the first order.

A third aspect of the present invention provides a communication system comprising at least first portable unit operable according to an embodiment the present invention and a further compatible portable unit.

Embodiments of the present invention will now be described by way of example only with reference to the accompanying drawings in which:
figure 1 illustrates a base unit and a plurality of portable units registered with the base unit in a cordless telephone system;
figure 2 is a block diagram of a portable unit in a TDMA cordless telephone system, to which the present invention is applied;
figure 3 is a flowchart of controlling a direct intercommunication between portable units according to an embodiment of the present invention;
figure 4 illustrates normal time slots and reversed time slots according to an embodiment of the present invention;
figure 5 is a block diagram of a base unit in the cordless telephone system;
figure 6 is a flowchart for controlling registration of a portable unit;
figure 7 is a flowchart for controlling a portable unit to receive registration information of another portable unit;
figure 8 is a flowchart for controlling an intercommunication between portable units according to another embodiment of the present invention; and
figure 9 is a flowchart for controlling a portable unit to receive an intercom call signal according to preferred embodiments.

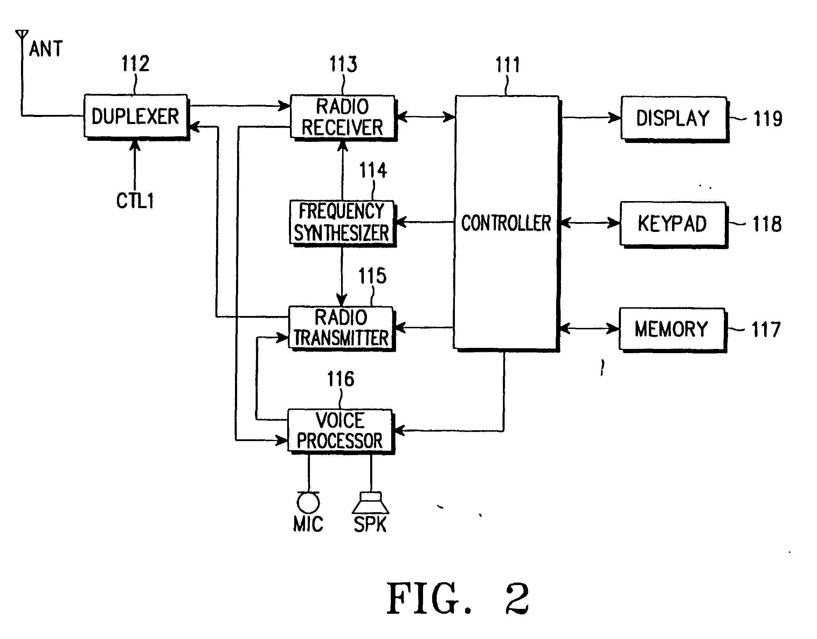

Figure 2 is a block diagram of a portable unit shown in Figure 1. Referring to figure 2, a controller 111 controls the entire operation of the portable unit, especially a direct intercommunication between portable units located outside of a service coverage area. A duplexer 112 sends radio data received via an antenna ANT to a radio receiver 113 and radio data received from a radio transmitter to the antenna ANT, under the control of the controller 111. Transmit and receive signals and data are duplexed into time slots of the portable unit using TDMA. The radio receiver 113 receives a call connection signal for establishing a communication link under the control of the controller 111 and feeds the call connection signal to the controller 111. In a speech mode, the radio receiver 113 outputs a radio-received voice signal using a local oscillation frequency received from a frequency synthesiser 114 to a voice processor 116. The frequency synthesiser 114 generates the local oscillation frequency under the control of the controller 111 and applies the local oscillation frequency to the radio receiver 113 and the radio transmitter 115. The radio transmitter 115 outputs to the duplexer 112 a voice signal received from the voice processor 116 using the local oscillation frequency received from the frequency synthesiser 114.

The voice processor 116 converts the voice data received from the radio transmitter 113 to an electrical voice signal under the control of the controller 111. A speaker SPK converts the voice signal received from the voice processor 116 to an audible sound. The voice processor 116 converts an electrical voice signal received from a microphone MIC to voice data through coding and outputs the voice data to the radio transmitter 115. A memory 117 includes a program memory (not shown) for storing programs needed to operate the portable unit and a data memory (not shown) for storing data generated during the control operation. The program memory and the data memory may be non-volatile and volatile, respectively. A keypad 118, provided with digit keys for dialling (not shown) and a plurality of function keys (not shown), supplies a key input signal corresponding to a key pressed by a user to the controller 111. The keypad 118 also has an intercom key for an intercommunication between portable units. A display 119 displays the operational states of the portable unit under the control of the controller 111.

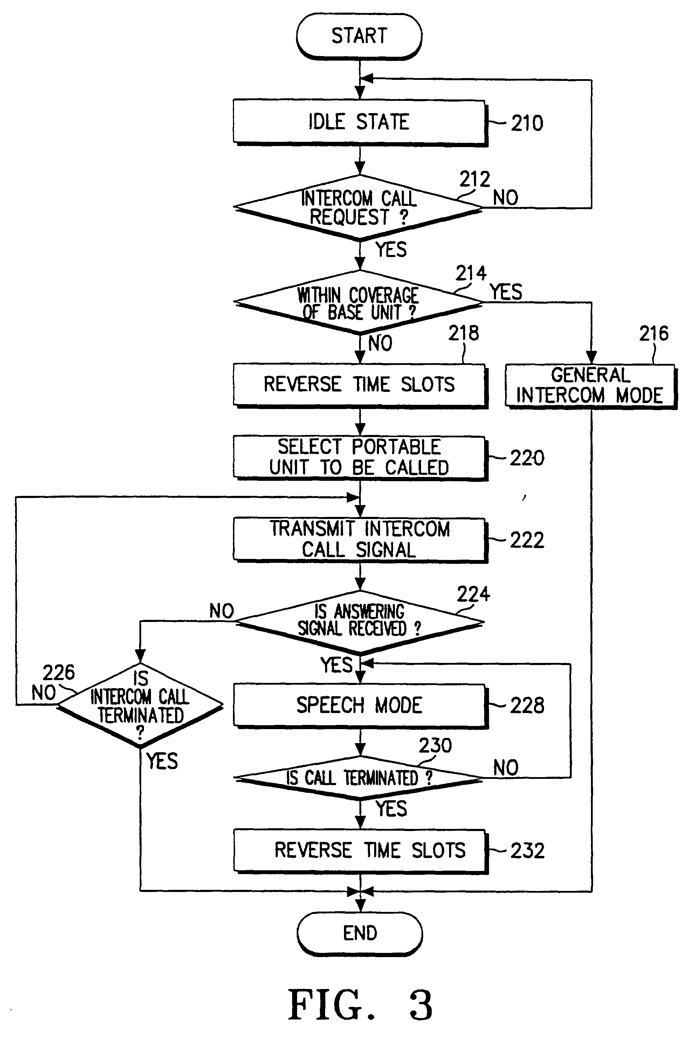

Figure 3 is a flowchart for controlling a direct intercommunication between portable units according to an embodiment of the present invention. This intercommunication will be described in detail with reference to figures 1, 2 and 3. The controller 111 is kept in an idle state in step 210 and determines whether or not an intercom key of the keypad 118 has been pressed in step 212. Upon input of the intercom key, the controller 111 determines whether or not the portable unit is located within a propagation area of a base unit using the radio receiver 113, the frequency synthesiser 114, and the radio transmitter 115. There are many ways to check the presence or absence of the portable unit within the propagation area. To facilitate a better understanding of the invention, two ways of performing such a check will presented here: one is to send an intercommunication request signal to the base unit by controlling the radio transmitter 115 and the frequency synthesiser 114 and to determine whether or not the radio receiver 113 receives a response signal (or answering signal) from the base unit within a predetermined time; and the other is to check the strengths of signals received from the base unit by continuously scanning the time slots of transmission and reception times for signal reception and to conclude that the portable unit is outside of the propagation area in the absence of signals received from the base unit. By the methods or some other suitable method, it would be determined that the first and second portable units CP_1 and CP_2 are within the propagation area and the third and fourth portable units CP_3 and CP_4 are beyond the propagation area.

In the embodiment of the present invention, the presence or absence of the portable unit within a propagation area is checked using the first method. In the case where the portable unit is determined to be in the propagation area in step 214, the controller 111 performs or enters a general intercommunication mode in step 216. Otherwise, the controller 111 reverses the order of a reception time Rx and a transmission time Tx assigned to the portable unit by controlling the radio receiver 113, the frequency synthesiser 114 and the radio transmitter 115. Reversal of the order in which the reception time Rx and the transmission time Tx are arranged is known as time reversal.

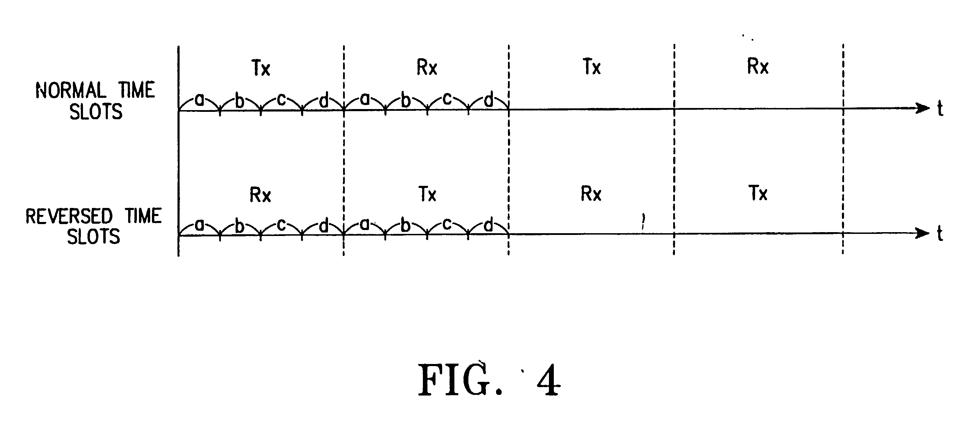

Figure 4 illustrates normal time slots and reversed time slots according to an embodiment of the present invention. In figure 4, the transmission time Tx precedes the reception time Rx with at least two time slots assigned respectively in the transmission time Tx and the reception time Rx, in a normal state. Although only four respective transmission and reception time slots are shown in figure 4 for clarity of description, conventionally twelve time slots are assigned to the transmission time Tx and the reception time Rx, respectively, in an actual TDMA cordless telephone system. The same time slots are assigned for transmission and reception in an actual communication. That is, when time slot a is assigned as a transmission time slot, the time slot a is also assigned as a reception time slot. In the case of time reversal, the normal transmission and reception times Tx and Rx are exchanged in order. Despite time reversal, the order of time slots is not changed. In other words, if the transmission time slots are arranged in the order of a-b-c-d, they become reception time slots of the same order in time reversal.

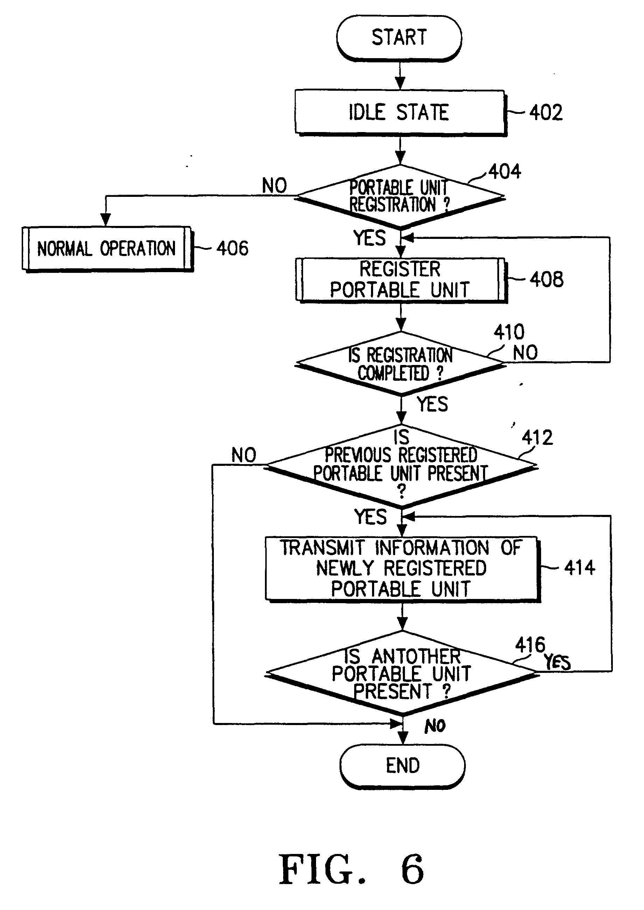

Referring to figure 3 again, after time reversal in step 218, the controller 111 displays the other available portable units registered with the base unit on the display 119, in step 220. The information of the other portable units is stored in the memory 117, which will be described in detail later with reference to figure 6. The controller 111 selects a portable unit for intercommunication according to key data received from the keypad 118. It will be appreciated that if only two portable units are registered with the base unit, the portable unit selecting procedure of step 220 may be omitted. In step 222, the controller 111 sends an intercom call signal in designated time slots to the selected portable unit by controlling the radio transmitter 115 and the frequency synthesiser 114. The controller 111 determines whether a response signal has been received from the called portable unit in step 224. A response signal is generated when the called portable unit goes off hook in response to the intercom call signal. Upon reception of a response signal in step 224, the controller 111 goes to step 228, that is a speech communication mode of operation is established, otherwise the controller 111 determines whether an intercom call termination signal has been received, in step 226. Upon reception of the intercom call termination signal in step 226, the call procedure is terminated. Otherwise, the procedure returns to step 222.

On the other hand, when the response signal has been received at step 224, the controller 111 enters or establishes a speech mode between the calling portable unit and the called portable unit, in step 228. For this purpose, time reversal is implemented in step 218 so that the transmission time Tx of the called portable unit corresponds to the reception time Rx of the calling portable unit and vice versa. Thus, the calling portable unit selects one of the reversed transmission time slots and sends an intercom call signal in the selected time slot to the called portable unit. Then, the called portable unit is sent traffic in the reception time Rx because it uses normal time slots. Therefore, the called portable unit receives the intercom call signal in the time slot selected by the calling portable unit. When a user of the called portable unit answers the call, an intercommunication is conducted between the portable units in the time slot in which the intercom call signal and an intercom response signal have been transferred.

Referring to figure 3, after the speech mode in step 228, the controller 111 determines whether a call termination signal has been received from the keypad 118 or the radio receiver 113 in step 230. Upon reception of the call termination signal, the controller 111 goes to step 232. Otherwise, the controller 111 continues in speech mode at step 228. In step 232, the controller 111 returns the reversed time slots to the original time slots by reversing the transmission and reception times reversed in step 218.

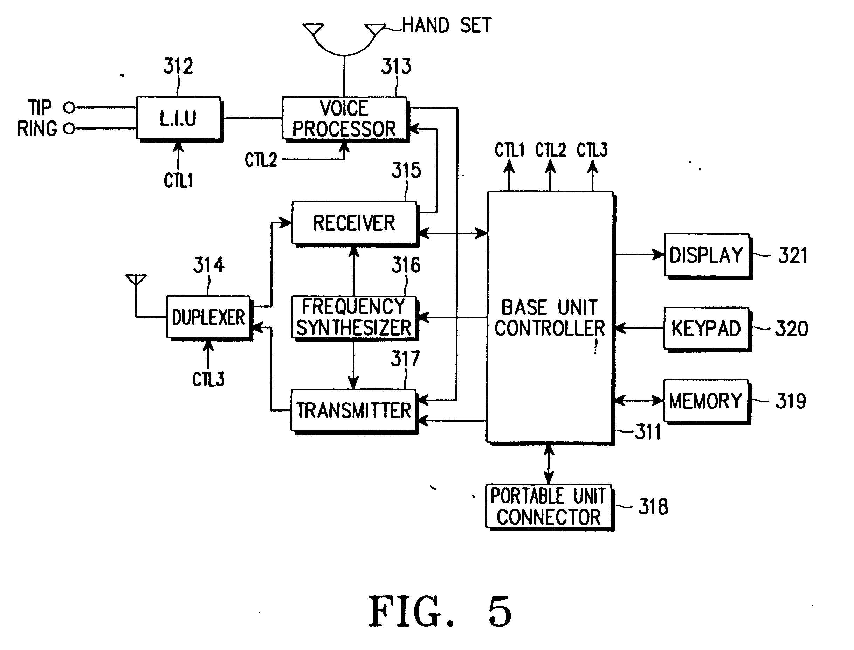

Figure 5 is a block diagram of a base unit of a TDMA cordless telephone system. Referring to figure 5, a base unit controller 311 controls the entire operation of the cordless telephone system, especially, provision of information on a new portable unit to existing portable units when the new portable unit is registered. A line interface unit (LIU) 312 is connected to or disconnected from a telephone line (i.e., tip and ring terminals) under the control of the controller 311 or by a hook switch (not shown). A voice processor 313 encodes or decodes voice transmitted and received during a voice communication under the control of the base unit controller 311. The voice communication may be conducted through the LIU 312 or with a portable unit via radio modules.

The structure and operation of the radio modules will be described below. A duplexer 314 feeds radio data received from an antenna ANT to a receiver 315 and radio data received from a transmitter 317 to the antenna ANT under the control of the base unit controller 311. Transmit and receive signals and data are duplexed in time slots since the base unit employs TDMA. The receiver 315 operates under the control of the controller 311 and supplies a calling signal received from the duplexer 314 to the controller 311. In a speech mode, the receiver 315 feeds a radio-received voice signal, using a local oscillation frequency received from a frequency synthesiser 316, to the voice processor 313. The frequency synthesiser 316 generates the local oscillation frequency under the control of the base unit controller 311 and outputs the local oscillation frequency to the receiver 315 and the transmitter 317. The transmitter 317 outputs the signal received from the voice processor 313, using the local oscillation frequency received from the frequency synthesiser 316, to the duplexer 112.

A portable unit connector 318 is connected to a portable unit, for charging a battery of the portable unit. A memory 319 includes a program memory (not shown) for storing control data needed for the control operation of the base unit controller 311, and a data memory (not shown) for storing data generated during the control operation, especially data of a portable unit upon registration of the portable unit with the base unit. A keypad 320, having digit keys for dialling (not shown) and function keys (not shown), generates a key input signal upon user input of a key and supplies the key input signal to the base unit controller 311. A display 321 displays the operational status of the base unit under the control of the base unit controller 311.

Figure 6 is a flowchart for controlling registration of a portable unit according to an embodiment of the present invention. Referring to figures 5 and 6, there will be given a detailed description of the registration of a portable unit and then transfer of information of the newly registered portable unit to other existing registered portable units. The base unit controller 311 is kept in an idle state in step 402. Upon generation of a key input signal by the keypad 320, the controller 311 determines whether or not the key input signal is for registration of a portable unit in step 404. If the key input signal indicates that the registration of a new portable unit is required, processing continues at step 408 and, otherwise, control passes to step 406 and normal operation of the base station is continued. In step 408, the base unit controller 311 registers the portable unit. The portable unit registration is implemented in the same manner as that for registration of a general portable unit, but further involves transmission of information on previously registered portable units, if they exist, to the newly registered portable unit. The information of the existing portable units represents their codes and numbers registered in the base unit. A portable unit code is a unique code owned by a specific portable unit and a portable unit number is the number allocated to a portable unit according to the order in which it was registered. The portable unit information may be a unique code or a registration number alone. An example of a portable unit registration table including portable unit information is given as follows:

**(Table 1)**

| portable unit | unique code | registration number |
|---|---|---|
| CP_1 | 157 D77 CA | 01 |
| CP_2 | 157 CA3 30 | 02 |
| CP_3 | 155 FF6 88 | 03 |
| CP_4 | 156 BCC 65 | 04 |

In step 410, the base unit controller 311 checks whether or not the portable unit registration process has been completed. Upon completion of the registration process, the procedure goes to step 412 otherwise, control returns to step 408. The base unit controller 311 determines whether or not there is a previously registered portable unit by referring to the portable unit registration table, in step 412. If there is a previously registered portable unit, the base unit controller 311 goes to step 414. If there is not a previously registered portable unit, the procedure ends. In step 414, the base unit controller 311 transfers the information (i.e., unique code and registration number) of the newly registered portable unit to the previously registered portable unit. When the information has been completely transferred, the base unit controller 311 determines whether or not there are any other previously registered portable unit in step 416. If there are other previously registered portable units, the procedure goes back to step 414 and, otherwise, the procedure ends.

For example, if the first portable unit CP_1 of table 1 is registered with the base unit, the base unit controller 311 does not transfer the information of other portable units to the first portable unit CP_1 in step 408 because the first portable unit CP_1 is the first one to be registered. Upon completion of the registration, the base unit controller 311 determines whether or not there are previously registered portable units by referring to the portable unit registration table in step 412. Since there are no previously registered portable units, the procedure ends. On the other hand, in the case of the registration of the third portable unit CP_3, the third portable unit CP_3 is registered and the unique codes and registration numbers of the previously registered portable units, that is, CP_1 and CP_2 are read from the portable unit registration table and are transmitted to the third portable unit CP_3, in step 408. Thus, the third portable unit CP_3 stores the received information of the first and second portable units CP_1 and CP_2 in the memory 117 shown in figure 2. When the registration has been completed, the base unit controller 311 checks the portable unit registration table. In the absence of previously registered portable units, the base unit controller 311 calls the first portable unit CP_1 and sends the information of the third portable unit CP_3 to the first portable unit CP_1, in step 414. The base unit controller 311 determines whether or not there is another previously registered portable unit, in step 416. Due to the existence of the second portable unit CP_2, the base unit controller 311 sends the information of the third portable unit CP_1 to the second portable unit CP_2 in step 414. Hence, each portable unit shares the information of the other portable units.

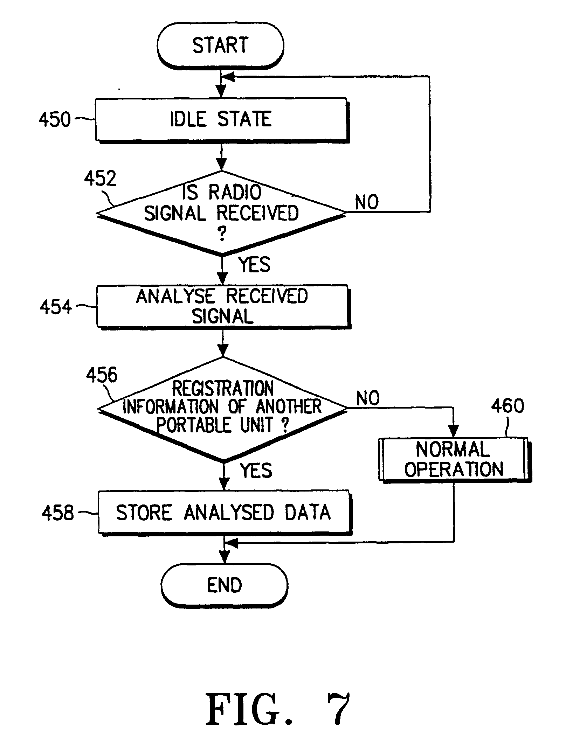

Reception of the information of a portable unit by another portable unit will be described in detail, referring to figure 7.

Figure 7 shows a flowchart for controlling a portable unit to receive the information of another portable unit. Referring to figures 1 to 7, the controller 111 is kept in an idle state in step 450, and determines whether or not a radio signal has been received by the radio receiver in step 452. When a radio signal has not been received, the procedure returns to step 450. Upon detection of a radio signal, the controller 111 analyses the radio signal in step 454 and determines whether or not the radio signal represents the registration information of another portable unit in step 456. If the radio signal is not the registration information of the other portable unit, the controller 111 performs a normal operation in step 460 and the procedure ends. However, if the radio signal represents the registration information of a different portable unit, the controller 111 stores the analysed data in the memory 117, at step 458. The data registered in the memory 117 is the same as that shown in the portable unit registration table of table 1. Through the steps of figures 6 and 7, each portable unit shares the information of the other portable units registered with the base unit.

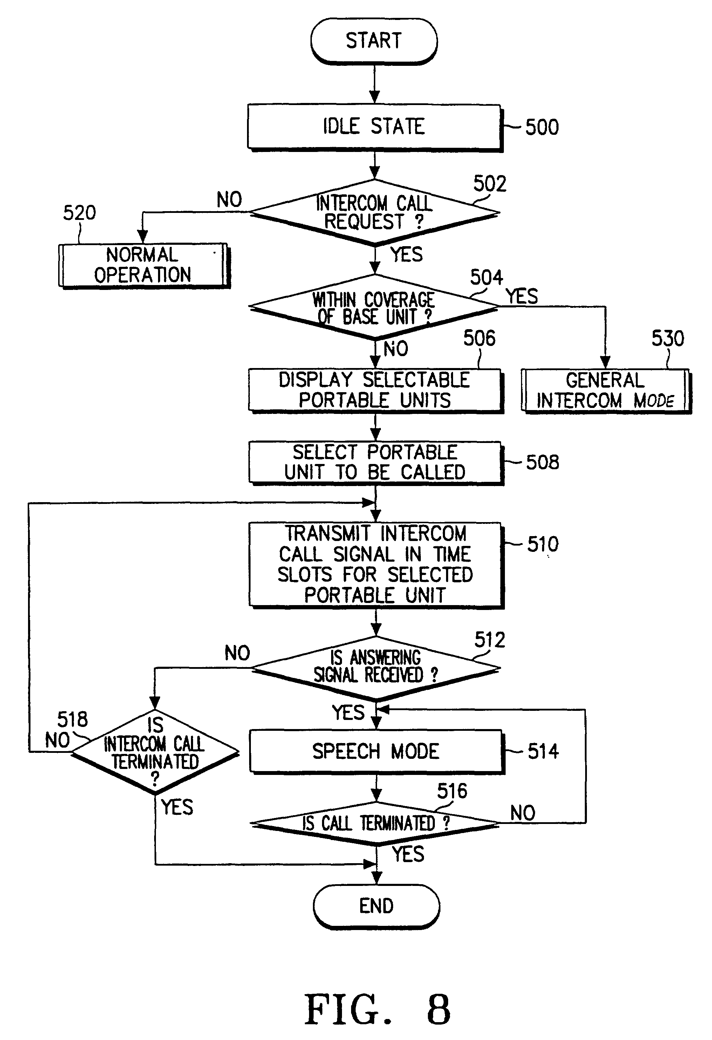

Figure 8 is a flowchart for controlling an intercommunication between portable units according to another embodiment of the present invention. Referring to figures 1 to 8, time slot assignment for intercommunication between portable units will be described in detail. The controller 111 is kept in an idle state in step 500. Upon reception of a key input signal from the keypad 118, the controller 111 determines whether or not the input key signal is an intercom key signal, in step 502. When it is not the intercom key signal, the controller 111 continues with normal operation in step 520. However, upon receipt of an intercom key signal, the controller 111 determines whether or not the portable unit is located within in a propagation area of the base unit, in step 504. The presence or absence of the portable unit within the propagation area of the base unit is determined by the second method described with reference to and as depicted in figure 3. The strengths of signals received from the base unit are checked and if there is no signal received from the base unit, the portable unit is determined to be outside of the propagation area. Therefore, the portable unit, when located beyond the propagation area of the base unit, checks all the time slots of its transmission and reception times Tx and Rx. If the portable unit is located within the propagation area of the base unit, the controller 111 performs a general intercommunication mode in step 530. However, if the portable unit is determined to be outside of the propagation area, the controller 111 displays selectable portable units on the display 119, in step 506. Here, the portable units displays data relating to the other portable units such as the codes of the other portable units in the portable unit registration table in digits or characters corresponding to the codes. For example, the first portable unit CP_1 may be displayed as portable unit #1 or CP_1 on the display 119.

Then, the controller 111 selects a portable unit to be called depending on key input signal received from the keypad 118, in step 508. Then controller 111 then reads the ID corresponding to a portable unit to be called from among the IDs of respective portable units, which are stored in the memory 117 of the portable unit and which correspond to the IDs of the portable units which were registered with the base unit according to the process described with reference to figures 6 and 7. Further, the controller generates data necessary for supporting an intercommunication. The data includes the ID of the selected portable unit with which the intercommunication is to be established. In step 510, the controller 111 designates time slots to communicate with the selected portable unit and transmits to the selected portable unit the same calling signal as would be output from the base unit if the intercommunication had been conducted via the base unit in the designated time slots by controlling the frequency synthesiser 114 and the radio transmitter 115, in step 510. As a consequence of the above process, the receiving portable unit detects only the portion of the signal received from the calling signal received from the transmitting portable unit which corresponds to the ID of the portable unit to be called. This allows a portable unit to determine whether or not it is being called. The same is true in the case where the receiving portable has been called by a base unit.

Assuming that the third portable unit CP_3 attempts a call to the fourth portable unit CP_4, they check all the time slots to determine whether data has been received because they are outside of the propagation area of the base unit. Upon input of an intercom key in step 502, the third portable unit CP_3 is determined to be beyond the propagation area in step 504. Then, the controller 111 displays data relating to selectable portable units on the display 119, in step 506. If the fourth portable unit CP_4 is selected in step 508, the controller 111 designates time slots for use in a call attempt and the third portable unit CP_3 sends a calling signal to the fourth portable unit CP_4 in the selected time slots, acting as a base unit, in step 510. The fourth portable unit CP_4 designates the time slots in which the third portable unit CP_3 sends the signal as reception time slots. Therefore, the transmission slots for the third portable unit CP_3 and the reception time slots for the fourth portable unit CP_4 are designated, that is selected, by the third portable unit CP_3.

Referring to figure 8, the controller 111 determines whether or not a response signal has been received from the radio receiver 113 by controlling the radio receiver 113 and the frequency synthesiser 114, in step 512. In the presence of the response signal, a speech mode is established at step 514, and otherwise, it goes to step 518. In step 518, the controller determines whether or not a key input signal for terminating intercommunication has been received from the keypad 118. Upon reception of the key input signal, the controller 111 ends the intercommunication operation. If an intercom call termination signal has not been received, the procedure returns to step 510.

Meanwhile, the controller 111 performs a speech mode between portable units in step 514, and checks whether or not a call termination signal has been received from the keypad 118, in step 516. Upon receipt of a call termination signal, the controller 111 terminates the intercommunication. In the absence of a call termination signal, the procedure returns to step 514.

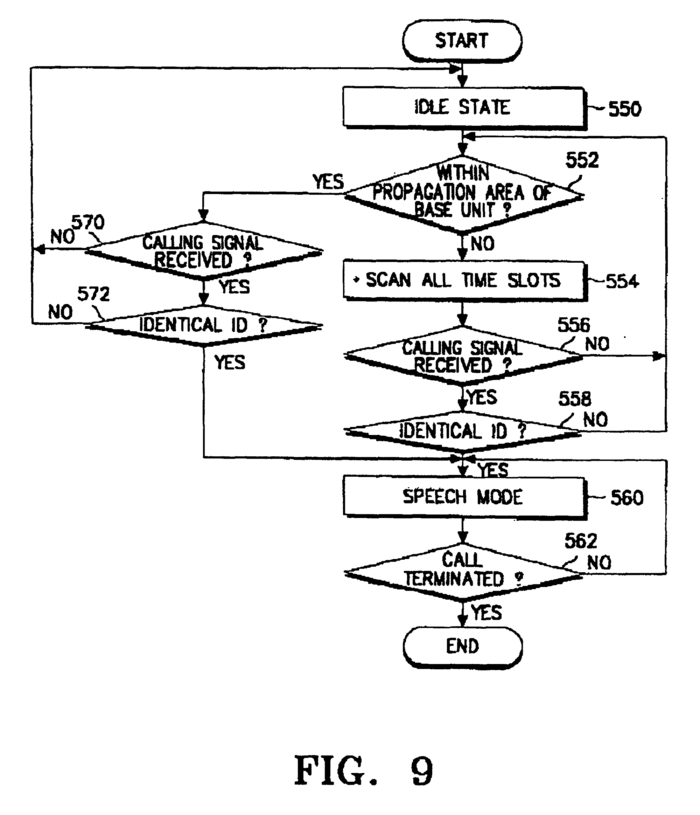

Figure 9 shows a flowchart for controlling a portable unit to receive an intercom signal according to preferred embodiments. The controller 111 is placed in an idle state in step 550 and a determination is made as to whether or not the portable unit is located within the propagation area of the base unit at step 552. The determination is a procedure in which a signal in a predetermined frequency band is received and checked by controlling the duplexer 112, the radio receiver 113 and the frequency synthesiser 114 according to one of the above described embodiments. It can be seen from figure 1 that the third and fourth portable units CP_3 and CP_4 are outside of the propagation area. Referring to figure 9, if it is determined that the portable unit is located beyond the propagation area, the controller 111 goes to step 554. Otherwise, control passes to step 570. In step 554, the controller 111 checks all the time slots in the predetermined frequency band by controlling the duplexer 112, the radio receiver 113 and the frequency synthesiser 114. The controller 111 scans the time slots of a transmission time Tx and a reception time Rx of available channels or a specific channel selected from the available channels. For example, a DECT (Digital European Cordless Telephone) terminal based on TDMA can use ten different channels of corresponding frequencies and each channel is assigned twelve time slots for a transmission time and a reception time, respectively. Therefore, at least 240 time slots should be scanned in a DECT communication system.

After all the time slots have been scanned in step 554, the controller 111 goes to step 556 upon receipt of an input radio signal via the radio receiver 113. In step 556, the controller 111 determines whether or not the input signal is a calling signal. If it is a calling signal, the procedure goes to step 558. Otherwise control returns to step 552. The controller 111 determines whether or not an ID of the input calling signal is identical to that of the portable unit stored in the memory 117 in step 558. If they are identical, the controller 111 outputs a ring signal to notify a user of the presence of an incoming call. If the user requests a communication by depressing a communication key (not shown in figure 2) of the keypad 118, the controller 111 performs or establishes a speech mode in step 560. However, if the IDs are different, the controller 111 returns to step 552. Following step 560, the controller 111 determines whether or not a call termination signal has been received by the radio receiver 118 at step 562. If such a signal has been received, the speech mode is terminated. In the absence of the call termination signal, the controller 111 continues with the speech mode in step 560. The call termination signal is generated by actuation of a communication key of the keypad 118, power-off or depression of a particular key for call termination.

However, if the portable unit is determined to be within the propagation area at step 552, the controller 111 determines whether or not a calling signal has been received by the radio receiver 113 at step 570. In the presence of the calling signal, the procedure continues at step 572. Otherwise, control continues at step 550. In step 572, the controller 111 determines whether or not an ID of the input signal is identical the ID of the portable unit stored in the memory 117. If the IDs are identical, the controller 111 continues at step 560, otherwise control passes to step 550.

As described above, since a direct intercommunication can be conducted between portable units without the use of a base unit, a cordless portable unit can be used in a walkie-talkie mode when a user is outdoors, that is out of range of the coverage area of the base station.

While the present invention has been described in detail with reference to the specific embodiments, they are mere exemplary applications. Thus, it is to be clearly understood that many variations can be made by anyone skilled in the art within the scope defined in the appended claims.

## Claims

1. A communication method for TDMA communication between first and second portable units which, when within the coverage area of a base station, communicate via the base station using transmission and reception time slots arranged according to a first order, the method comprising the steps of:
determining whether or not the first portable unit is located within the coverage area of the base station;
arranging the transmission and reception time slots of the first portable unit such that they coincide with the reception and transmission time slots of the second portable unit, if the portable units are not within the coverage area; and
using the coincident time slots for support a speech mode of communication between the first and second portable units.

2. A method as claimed in claim 1, wherein the step of arranging comprises the steps of
reversing the order of the transmission and reception time slots of the first portable unit by designating the transmission time slots of the first portable unit as reception time slots and designating the reception time slots of the first portable unit as transmission time slots.

3. A method as claimed in either of claims 1 or 2, further comprising the steps of
reading data from a portable unit registration table stored in a memory of the first portable unit, the table comprising data relating to a plurality of portable units which are registered with the base station;
displaying data relating to selectable ones of the plurality of portable units, preferably excluding the first portable unit;
selecting one of the displayed portable units; and
transmitting a call signal to the selected portable unit.

4. A method as claimed in any preceding claim, further comprising the step of
receiving or generating a call termination signal; and
restoring the transmission and reception time slots of the first portable unit by arranging the transmission and reception time slots according to a first order.

5. A first portable unit for TDMA communication with a second portable unit which, when within the coverage area of a base station, communicate each other via the base station using transmission and reception time slots arranged according to a first order, the first portable unit comprising:
means for determining whether or not the first portable unit is located within the coverage area of the base station;
means for arranging the transmission and reception time slots of the first portable unit such that they coincide with the reception and transmission time slots of the second portable unit, if the portable units are not within the coverage area; and
means for using the coincident time slots for support a speech mode of communication between the first and second portable units.

6. A first portable unit as claimed in claim 5, wherein the means for arranging comprises
means for reversing the order of the transmission and reception time slots of the first portable unit by designating the transmission time slots of the first portable unit as reception time slots and designating the reception time slots of the first portable unit as transmission time slots.

7. A first portable unit as claimed in either of claims 5 or 6, further comprising
means for reading data from a portable unit registration table stored in a memory of the first portable unit, the table comprising data relating to a plurality of portable units which are registered with the base station;
means for displaying data relating to selectable ones of the plurality of portable units, preferably excluding the first portable unit;
means for selecting one of the displayed portable units; and
means for transmitting a call signal to the selected portable unit.

8. A first portable unit as claimed in any of claims 5 to 7, further comprising
means for receiving or generating a call termination signal; and means for restoring the transmission and reception time slots of the first portable unit by arranging the transmission and reception time slots according to a first order.

9. A communication system comprising at least one first portable unit according to any of claims 5 to 8, a compatible base station and at least one compatible portable unit.

## Patentansprüche

1. Kommunikationsverfahren zur TDMA-Kommunikation zwischen einer ersten und einer zweiten tragbaren Einheit, die, wenn sie sich innerhalb des Versorgungsbereiches einer Basisstation befinden, über die Basisstation unter Verwendung von Sende- und Empfangs-Zeitschlitzen miteinander kommunizieren, die entsprechend einer ersten Reihenfolge angeordnet sind, wobei das Verfahren die folgenden Schritte umfasst:
Feststellen, ob sich die erste tragbare Einheit innerhalb des Versorgungsbereiches der Basisstation befindet;
Anordnen der Sende- und Empfangs-Zeitschlitze der ersten tragbaren Einheit so, dass sie mit den Empfangs- und Sende-Zeitschlitzen der zweiten tragbaren Einheit übereinstimmen, wenn sich die tragbaren Einheiten nicht innerhalb des Versorgungsbereiches befinden; und
Verwenden der übereinstimmenden Zeitschlitze zur Unterstützung eines Sprach-Kommunikationsmodus zwischen der ersten und der zweiten tragbaren Einheit.

2. Verfahren nach Anspruch 1, wobei der Schritt des Anordnens die folgenden Schritte umfasst:
Umkehren der Reihenfolge der Sende- und Empfangs-Zeitschlitze der ersten tragbaren Einheit, indem die Sende-Zeitschlitze der ersten tragbaren Einheit zu Empfangs-Zeitschlitzen bestimmt werden und die Empfangs-Zeitschlitze der ersten tragbaren Einheit zu Sende-Zeitschlitzen bestimmt werden.

3. Verfahren nach Anspruch 1 oder 2, das des Weiteren die folgenden Schritte umfasst:
Auslesen von Daten aus einer Tabelle zum Registrieren tragbarer Einheiten, die in einem Speicher der ersten tragbaren Einheit gespeichert ist, wobei die Tabelle Daten umfasst, die sich auf eine Vielzahl tragbarer Einheiten beziehen, die bei der Basisstation registriert sind;
Anzeigen von Daten, die sich auf auswählbare der Vielzahl tragbarer Einheiten beziehen und vorzugsweise die erste tragbare Einheit ausschließen;
Auswählen einer der angezeigten tragbaren Einheiten; und
Senden eines Rufsignals an die ausgewählte tragbare Einheit.

4. Verfahren nach einem der vorangehenden Ansprüche, das des Weiteren den folgenden Schritt umfasst:
Empfangen bzw. Erzeugen eines Rufabschlusssignals; und
Wiederherstellen der Sende- und Empfangs-Zeitschlitze der ersten tragbaren Einheit, indem die Sende- und Empfangs-Zeitschlitze entsprechend einer ersten Reihenfolge angeordnet werden.

5. Erste tragbare Einheit für TDMA-Kommunikation mit einer zweiten tragbaren Einheit, die, wenn sie sich innerhalb des Versorgungsbereiches einer Basisstation befinden, über die Basisstation unter Verwendung von Sende- und Empfangs-Zeitschlitzen, die entsprechend einer ersten Reihenfolge angeordnet sind, miteinander kommunizieren, wobei die erste tragbare Einheit umfasst:
eine Einrichtung, die feststellt, ob sich die erste tragbare Einheit innerhalb des Versorgungsbereiches der Basisstation befindet oder nicht;
eine Einrichtung, die die Sende- und Empfangs-Zeitschlitze der ersten tragbaren Einheit so anordnet, dass sie mit den Empfangs- und Sende-Zeitschlitzen der zweiten tragbaren Einheit übereinstimmen, wenn sich die tragbaren Einheiten nicht innerhalb des Versorgungsbereiches befinden; und
eine Einrichtung, die die übereinstimmenden Zeitschlitze verwendet, um einen Sprach-Kommunikationsmodus zwischen der ersten und der zweiten tragbaren Einheit zu unterstützen.

6. Erste tragbare Einheit nach Anspruch 5, wobei die Einrichtung zum Anordnen umfasst:
eine Einrichtung, die die Reihenfolge der Sende- und Empfangs-Zeitschlitze der ersten tragbaren Einheit umkehrt, indem sie die Sende-Zeitschlitze der ersten tragbaren Einheit zu Empfangs-Zeitschlitzen bestimmt und die Empfangs-Zeitschlitze der ersten tragbaren Einheit zu Sende-Zeitschlitzen bestimmt.

7. Erste tragbare Einheit nach den Ansprüchen 5 oder 6, die des Weiteren umfasst:
eine Einrichtung, die Daten aus einer Tabelle zum Registrieren tragbarer Einheiten ausliest, die in einem Speicher der ersten tragbaren Einheit gespeichert ist, wobei die Tabelle Daten umfasst, die sich auf eine Vielzahl tragbarer Einheiten beziehen, die bei der Basisstation registriert sind;
eine Einrichtung, die Daten anzeigt, die sich auf auswählbare der Vielzahl tragbarer Einheiten beziehen und vorzugsweise die erste tragbare Einheit ausschließen;
eine Einrichtung, die eine der angezeigten tragbaren Einheiten auswählt; und
eine Einrichtung, die ein Rufsignal an die ausgewählte tragbare Einheit sendet.

8. Erste tragbare Einheit nach einem der Ansprüche 5 bis 7, die des Weiteren umfasst:
eine Einrichtung, die ein Rufabschlusssignal empfängt oder erzeugt; und
eine Einrichtung, die die Sende- und Empfangs-Zeitschlitze der ersten tragbaren Einheit wiederherstellt, indem sie die Sende- und Empfangs-Zeitschlitze entsprechend einer ersten Reihenfolge anordnet.

9. Kommunikationssystem, das wenigstens eine erste tragbare Einheit nach einem der Ansprüche 5 bis 8, eine kompatible Basisstation und wenigstens eine kompatible tragbare Einheit umfasst.

## Revendications

1. Procédé de communication destiné à une communication AMRT (Accès Multiple par Répartition Temporelle) entre des première et seconde unités portatives qui, lorsqu'elles se trouvent à l'intérieur de la zone de couverture d'une station de base, communiquent par l'intermédiaire de la station de base en utilisant des tranches de temps d'émission et de réception agencées selon un premier ordre, le procédé comprenant les étapes consistant à :
déterminer si oui ou non la première unité portative est située à l'intérieur de la zone de couverture de la station de base ;
agencer les tranches de temps d'émission et de réception de la première unité portative de façon qu'elles coïncident avec les tranches de temps de réception et d'émission de la seconde unité portative, si les unités portatives ne sont pas à l'intérieur de la zone de couverture ; et
utiliser les tranches de temps coïncidentes pour la prise en charge d'un mode de communication vocal entre les première et seconde unités portatives.

2. Procédé selon la revendication 1, dans lequel l'étape d'agencement comprend les étapes consistant à :
inverser l'ordre des tranches de temps d'émission et de réception de la première unité portative en désignant les tranches de temps d'émission de la première unité portative comme étant des tranches de temps de réception et en désignant les tranches de temps de réception de la première unité portative comme étant des tranches de temps d'émission.

3. Procédé selon l'une quelconque des revendications 1 ou 2, comprenant en outre les étapes consistant à :
lire des données d'une table d'enregistrement d'unités portatives stockée dans une mémoire de la première unité portative, la table comprenant des données concernant une pluralité d'unités portatives qui sont enregistrées auprès de la station de base ;
afficher des données concernant celles qui peuvent être sélectionnées de la pluralité d'unités portatives, en excluant de préférence la première unité portative ;
sélectionner l'une des unités portatives affichées ; et
émettre un signal d'appel vers l'unité portative sélectionnée.

4. Procédé selon l'une quelconque des revendications précédentes, comprenant en outre les étapes consistant à :
recevoir ou générer un signal de terminaison d'appel ; et
rétablir les tranches de temps d'émission et de réception de la première unité portative en agençant les tranches de temps d'émission et de réception selon un premier ordre.

5. Première unité portative destinée à une communication AMRT avec une seconde unité portative, ces unités portatives, lorsqu'elles se trouvent à l'intérieur de la zone de couverture d'une station de base, communiquant l'une avec l'autre par l'intermédiaire de la station de base en utilisant des tranches de temps d'émission et de réception agencées selon un premier ordre, la première unité portative comprenant :
des moyens pour déterminer si oui ou non la première unité portative se trouve à l'intérieur de la zone de couverture de la station de base ;
des moyens pour agencer les tranches de temps d'émission et de réception de la première unité portative de façon qu'elles coïncident avec les tranches de temps de réception et d'émission de la seconde unité portative, si les unités portatives ne se trouvent pas à l'intérieur de la zone de couverture ; et
des moyens pour utiliser les tranches de temps coïncidentes pour prendre en charge un mode de communication vocal entre les première et seconde unités portatives.

6. Première unité portative selon la revendication 5, dans laquelle les moyens d'agencement comprennent :
des moyens pour inverser l'ordre des tranches de temps d'émission et de réception de la première unité portative en désignant les tranches de temps d'émission de la première unité portative comme étant des tranches de temps de réception et en désignant les tranches de temps de réception de la première unité portative comme étant des tranches de temps d'émission.

7. Première unité portative selon l'une quelconque des revendications 5 ou 6, comprenant en outre :
des moyens pour lire des données d'une table d'enregistrement d'unités portatives stockée dans une mémoire de la première unité portative, la table comprenant des données concernant une pluralité d'unités portatives qui sont enregistrées auprès de la station de base ;
des moyens pour afficher des données concernant celles qui peuvent être sélectionnées de la pluralité d'unités portatives, en excluant de préférence la première unité portative ;
des moyens pour sélectionner l'une des unités portatives affichées ; et
des moyens pour émettre un signal d'appel vers l'unité portative sélectionnée.

8. Première unité portative selon l'une quelconque des revendications 5 à 7, comprenant en outre :
des moyens pour recevoir ou générer un signal de terminaison d'appel ; et
des moyens pour rétablir les tranches de temps d'émission et de réception de la première unité portative en agençant les tranches de temps d'émission et de réception selon un premier ordre.

9. Système de communication comprenant au moins une première unité portative selon l'une quelconque des revendications 5 à 8, une station de base compatible et au moins une unité portative compatible.
